## Europäisches Patentamt

## European Patent Office

## Office européen des brevets

(19)

(11) Publication number: **0 326 360**
A2

# (12) EUROPEAN PATENT APPLICATION

(21) Application number: 89300711.2

(22) Date of filing: 25.01.89

(51) Int. Cl.⁴: **B 01 D 53/22**
B 01 D 13/00

(30) Priority: 27.01.88 JP 16199/88

(43) Date of publication of application:
02.08.89 Bulletin 89/31

(84) Designated Contracting States:
AT BE CH DE ES FR GB GR IT LI LU NL SE

(71) Applicant: JAPAN GORE-TEX, INC.
42-5, 1-chome Akazutsumi
Setagaya-ku Tokyo 156 (JP)

(72) Inventor: Kikukawa Hiroyasu
348-7 Otami
Okayama-shi, Okayama-ken (JP)

Sakai Mari
64-8 Akoda
Okayama-shi, Okayama-ken (JP)

Shimoda Fiji
17-14, 3-chome, Naka-cho, Musashino-shi
Tokyo-to (JP)

Kitada Fumiko
67-13 Nagaoka
Okayama-shi, Okayama-ken (JP)

(74) Representative: Knott, Stephen Gilbert et al
MATHISEN, MACARA & CO. The Coach House 6-8
Swakeleys Road
Ickenham Uxbridge Middlesex UB10 8BZ (GB)

(54) **Process for selectively separating water vapour from a gaseous mixture.**

(57) A process for selectively separating water vapour from a gaseous mixture comprises passing the gaseous mixture including water vapour along and in contact with a membrane which is selectively permeable to water vapour and wherein the water vapour permeation rate $Q_{H_2O}$ is greater than 30 $Nm^3/m^2.hr.atm$ at 25°C and the ratio of $Q_{H_2O}$ to the permeation rate $Q_G$ of the gas or gases from which the water vapour is to be separated, i.e. $Q_{H_2O}/Q_G$, is greater than 10,000. The membrane preferably has a thickness of from 0.1 microns to 50 microns.

EP 0 326 360 A2

**Description**

# PROCESS FOR SELECTIVELY SEPARATING WATER VAPOUR FROM A GASEOUS MIXTURE

The present invention relates to a process for separating water vapour from gaseous mixtures such as moisture-laden air, hydrocarbon gases such as natural gas, and other industrial process gases.

Methods of removing water vapour from air, separating water from hydrocarbon gases in natural gas, or removing water vapour in the manufacture or purification of various types of gases include methods in which water is condensed and removed by compressing the gas which is to be treated and methods in which the moisture content is condensed and removed by cooling. However, such methods require a large driving force or thermal energy for compression or cooling.

The use of moisture-absorbing agents such as $CaCl_2$, NaCl and LiBr is also known for removing water from gases. However, because continuous moisture absorption is difficult using a moisture-absorbing agent, it is difficult to apply such a method to an industrial production line which requires continuous operation to be efficient.

A method of removing water vapour from a gas by means of a membrane using the difference in the partial pressure of the water vapour has been proposed, and such a method makes continuous operation possible. Furthermore, the water vapour can be separated using only a relatively small amount of energy. Examples of such processes are disclosed in Japaneses Laid-Open Patent Application No. 54-114481, in which PVA containing an aqueous solution of lithium chloride is used; Japanese Laid-Open Patent Application No. 54-152679, in which a cellulose-type membrane is used; Japanese Laid-Open Patent Application No. 60-261503, in which an organosilane plasma-polymerized membrane is used; Japanese Laid-Open Patent Application No. 62-42722, wherein a polyamino acid urethane is used; Japanese Laid-Open Patent Application No. 62-42723, wherein an aromatic polyimide is used; U.S. Patent 3,735,558; Japanese Laid-Open Patent Application No. 61-187918; Japanese Laid-Open Patent Application No. 61-229830; Japanese Laid-Open Patent Application No. 62-7417; and Japanese Laid-Open Patent Application No. 62-30338, wherein hollow fluororesin-type membranes are used.

However, in the case of these known membrane separation processes, sufficient water vapour selectivity and permeation rates are not obtained. Accordingly, such processes have not yet been widely employed on an industrial level. Even in the case of processes disclosed very recently, the water vapour permeation rate is relatively low so that a large-scale apparatus is necessary in cases where large-scale industrial treatment is required.

Furthermore, in the case of conventional processes, such as those mentioned above, the selective separation properties are not always desirable, either. The separation ratios obtained are generally low, and, in this respect, the processes are disadvantageous in terms of apparatus and operation.

Membranes which are selectively permeable to water vapour and also impermeable to other gases and liquid water are also known, such as from U.S. Patent 4,194,041.

As used herein, the flow rate of water vapour through a separation membrane is designated $Q_{H_2O}$, the flow rate of other gases that are to be separated from the water vapour is designated $Q_G$ and the ratio of the water vapour flow rate to the flow rate of the gas or gases to be separated from the water vapour, i.e., $Q_{H_2O}Q_G$, is designated as X.

Even in theoretical terms, it has been difficult to obtain a membrane material with a high $Q_{H_2O}$ and a high X ratio in the range of industrially feasible membrane thicknesses.

According to the invention there is provided a process for selectively separating water vapour from a gaseous mixture including water vapour, comprising passing the gaseous mixture along and in contact with a membrane which is selectively permeable to water vapour and wherein the water vapour permeation rate, $Q_{H_2O}$, is greater than 30 $Nm^3/m^2.hr.atm$ at 25°C and the ratio of $Q_{H_2O}$ to the permeation rate $Q_G$ of the gas or gases from which the water vapour is to be separated, i.e. $Q_{H_2O}/Q_G$, is greater than 10,000. The water vapour permeation rate $Q_{H_2O}$ may exceed 80 $Nm^3/m^2.hr.atm.$, $Nm^3$ designating normal cubic metres, which is the gaseous volume in cubic metres at a temperature of zero degrees Celsius and a pressure of one atmosphere.

The selectively permeable membrane preferably comprises a fluororesin copolymer which contains a hydrophilic functional group such as a sulphonic acid group, a sulphuric acid group, a sulphonate group, a carboxylic acid group, a carboxylate group, or an ammonium salt group.

The membrane is preferably a composite membrane comprising a film of a fluororesin copolymer containing a hydrophilic functional group laminated to a support layer. The support layer may be a sheet of cellulose, a sheet of porous polyolefin, a sheet of porous polytetrafluoroethylene, a sheet of polyester or a sheet of polysulphonate. The support layer may be a fabric, which may be woven, nonwoven or knitted.

The membrane preferably has a thickness of from 0.1 to 50 microns.

By using a fluororesin-type copolymer membrane which has hydrophilic functional groups such as sulphonic acid groups or sulphonate groups, or a composite membrane which consists of such a fluororesin-type copolymer film and a material which supports the film, it is possible to obtain a high $Q_{H_2O}$ and a high X ratio in a membrane which is within the industrially feasible membrane thickness range of 0.1 to 50 microns.

Specifically, the hydrophilic functional groups contained in the fluororesin copolymer with which the porous support layer is laminated or impregnated cause water vapour to be adsorbed onto the surface of the membrane, and to diffuse osmotically through the membrane to the other side of the membrane.

By setting the water vapour permeation rate $Q_{H_2O}$ at 30 $Nm^3/m^2.hr.atm$ or greater, and setting the ratio X of $Q_{H_2O}$ to the permeation rate $Q_G$ of the gas that is to be separated from the water vapour, i.e. $Q_{H_2O}/Q_G$, at 10,000 or greater, it is possible to perform a highly efficient separation treatment with selectivity for water vapour.

By supporting the aforementioned fluororesin-type copolymer membrane with a porous sheet, or with a woven knitted, or nonwoven fabric, it is possible to ensure acceptable strength so that the membrane will be able to withstand working, handling and pressure conditions during the gas separation treatment.

Regarding the hydrophilic functional groups contained in the fluororesin with which the porous support is laminated or impregnated, sulphonic acid groups and sulphonate groups are especially desirable. Besides such groups, however, sulphuric acid groups, carboxylic acid groups, carboxylate groups or ammonium salt groups may be used. As a result of the impregnation or lamination of the support with a fluororesin membrane containing such hydrophilic functional groups, the composite membrane material effectively becomes a nonporous body, at least in the thickness direction. As a result, the membrane is virtually impermeable to air, nitrogen and hydrocarbon gases such as methane. Water vapour, however, is adsorbed on the membrane surface by the hydrophilic functional groups in the fluororesin with which the support is laminated or impregnated, and this water vapour subsequently diffuses and passes rapidly through the membrane layer. The driving force of this action is the partial pressure difference of the vapour across the membrane. If this partial pressure difference is large, the water vapour permeation rate is large.

A membrane for use in the present invention can be manufactured as a membrane with a thickness of approximately 0.1 to 50 microns, which is suited to industrial mass production. In the case of the present invention, a product in this membrane thickness range possesses a $Q_{H_2O}$ of 30 $Nm^3/m^2.hr.atm$ or greater, and an X ratio ($Q_{H_2O}/Q_G$) of 10,000 or greater. The formed membrane is preferably dried under appropriate drying conditions, e.g. by subjecting the membrane to a drying treatment in a thermostat for 30 to 300 minutes at 60-150°C, and preferably 100 to 200 minutes at 90-120°C.

As a result of being supported by an appropriate support, the membrane is also acceptable in terms of strength, and the water vapour separating operation is stable. Examples of supports which can be used include cellulose-type, polyolefin-type, polyester-type, polysulphonate-type and fluororesin-type porous supports, and a material which possesses heat resistance and chemical resistance is most desirable, such as the porous expanded polytetrafluoroethylene EPTFE) disclosed in U.S. Patents 3,953,566 and 4,187,390.

A number of non-limiting examples will now be described to further illustrate the manufacture and operation of composite membranes for carrying out the invention.

### EXAMPLE I

A fluororesin copolymer membrane containing sulphonic acid groups, being a copolymer of tetrafluoroethylene and perfluorovinylether, was formed to a thickness of 10 microns on the surface of a porous EPTFE membrane having a thickness of 40 microns, a porosity of 75% and a maximum pore diameter of 0.5 microns as determined by the ethanol bubble point test method ASTM F316-80. Following air drying, the membrane was treated in a thermostat for 180 minutes at 100°C, producing a membrane which is selectively permeable to water vapour for carrying out the invention.

Table 1 shows the gas permeation rates and separation ratios obtained for water vapour, $N_2$, $O_2$, $H_2$ and $CH_4$ using this selectively permeable composite membrane at 25°. Permeation testing for water vapour was carried out by feeding air containing water vapour to the feed side of the membrane while the opposite, permeating side is depressurized to 1 Torr. The water vapour which permeates through the membrane to the permeating side is condensed to liquid by a cold trap and the quantity (Q) is measured. The partial pressure (P1) of water in the air at the feed side is determined by measuring the dew point, and that (P2) at the permeating side is taken as the depressurized pressure. The permeating velocity (K) is calculated from the following equation:
$$Q = K(P1-P2)AH$$
wherein A = membrane area and H = measuring period.

For $N_2$, $O_2$, $H_2$ and $CH_4$, each pure gas is supplied at the feed side of the membrane and the opposite, permeating side is depressurized as before. The content of each pure gas both at the feed side and at the permeating side is measured by means of gas chromatography. From these data, the quantity (Q) of each pure gas which permeates through the membrane is determined as above. The partial pressures of each pure gas at the feed side (P1) and at the permeating side (P2) are in each case the pressure at the feed side and that at the depressurized permeating side. The permeating velocity (K) of each pure gas is calculated from the above-mentioned equation.

Table 1

| | Gas Permeation Rate $NM^3/m^2$ hr atm | Permeation Rate Ratio X $(Q_{H_2O}/Q_G)$ |
|---|---|---|
| Water vapour | 37 | - |
| $N_2$ | $3.3 \times 10^{-4}$ | 252000 |
| $O_2$ | $3.5 \times 10^{-4}$ | 143000 |
| $H_2$ | $3.0 \times 10^{-3}$ | 28000 |
| $CH_4$ | $3.1 \times 10^{-4}$ | 268000 |

### EXAMPLE 2

A porous, expanded polytetrafluoroethylene membrane similar to that used in Example 1 was impregnated with a 9% ethanol solution of the fluororesin copolymer containing sulphonic acid groups as used in Example 1. The impregnated membrane was allowed to stand for 24 hours at $40°C$, and was then further dried for 180 minutes at $120°C$ to produce a membrane selectively permeable to water vapour.

Table 2 shows the gas permeation rates and separation ratios obtained for water vapour, $N_2$, $O_2$, $H_2$ and $CH_4$ using this permeable membrane at 25°, all measured as in Example 1.

Table 2

| | Gas Permeation Rate $NM^3/m^2$ hr atm | Permeation Rate Ratio X $(Q_{H_2O}/Q_G)$ |
|---|---|---|
| Water vapour | 37 | - |
| $N_2$ | $8.5 \times 10^{-5}$ | 435000 |
| $O_2$ | $1.5 \times 10^{-4}$ | 247000 |
| $H_2$ | $7.7 \times 10^{-4}$ | 48000 |
| $CH_4$ | $8.0 \times 10^{-5}$ | 463000 |

### EXAMPLE 3

A fluororesin copolymer membrane containing carboxylate groups, being a copolymer of tetrafluoroethylene and perfluorovinylether, was formed to a thickness of 5 microns on the surface of a porous polypropylene membrane having a thickness of 25 microns, a pore diameter of 0.02 microns to 0.2 microns, and a porosity of 38%. Following air drying, the membrane was treated in a thermostat for 180 minutes at $100°C$, producing a membrane selectively permeable to water vapour.

Table 3 shows the gas permeation rates and separation ratios obtained for water vapour $N_2$, $O_2$, $H_2$ and $CH_4$ using this permeable membrane at $25°C$, measured as above.

Table 3

| | Gas Permeation Rate $NM^3/m^2$ hr atm | Permeation Rate Ratio X $(Q_{H_2O}/Q_G)$ |
|---|---|---|
| Water vapour | 33 | - |
| $N_2$ | $3.9 \times 10^{-4}$ | 85000 |
| $O_2$ | $6.8 \times 10^{-4}$ | 49000 |
| $H_2$ | $3.1 \times 10^{-3}$ | 11000 |
| $CH_4$ | $3.7 \times 10^{-4}$ | 89000 |

As described above, it is thus possible to manufacture, in an industrially efficient manner, a membrane which is selectively permeable to water vapour and has a high water vapour permeation rate, which is superior in terms of selective separation properties and which makes it possible to perform an efficient water vapour separation treatment using a relatively compact apparatus.

**Claims**

1. A process for selectively separating water vapour from a gaseous mixture including water vapour, comprising passing the gaseous mixture along and in contact with a membrane which is selectively permeable to water vapour and wherein the water vapour permeation rate $Q_{H_2O}$ greater than 30 $Nm^3/m^2.hr.atm$ at $25°C$ and the ratio of $Q_{H_2O}$ to the permeation rate $Q_G$ of the gas or gases from which the water vapour is to be separated, i.e., $Q_{H_2O}$, is greater than 10,000.

2. A process according to claim 1 wherein the water vapour permeation rate $Q_{H_2O}$ of the membrane exceeds 80 $Nm^3/m^2.hr.atm$.

3. A process according to claim 1 wherein said membrane comprises a fluororesin copolymer which contains a hydrophilic functional group.

4. A process according to claim 3 wherein said hydrophilic functional group is a sulphonic acid group, a sulphonate group, a sulphuric acid group, a carboxylic acid group, a carboxylate group, or an ammonium salt group.

5. A process according to claim 3 or claim 4, wherein said membrane is a composite membrane comprising a film of said fluororesin copolymer film containing a hydrophilic functional group laminated to a support layer.

6. A process according to claim 5 wherein said support layer is a sheet of porous, expanded polytetrafluoroethylene, a sheet of cellulose, a sheet of porous polyolefin, a sheet of polyester, or a sheet of polysulphonate.

7. A process according to claim 5 wherein said support layer is a fabric.

8. A process according to claim 7 wherein said fabric is a woven, nonwoven, or knitted fabric.

9. A process according to any one of the preceding claims wherein said membrane has a thickness of from 0.1 to 50 microns.